# DEMANDE DE BREVET EUROPEEN

(11) **EP 3 114 924 A1**
(43) Date de publication de la demande: **11.01.2017**
(21) Numéro de dépôt: 16178905.2
(22) Date de dépôt: 11.07.2016
(51) Int. Cl.: A01K 1/02

(54) **CASE DESTINEE A HEBERGER UNE TRUIE ET SES PORCELETS, ET PROCEDE DE MISE EN OEUVRE**

(30) Priorité: 09.07.2015 FR 1556516
(71) Demandeur: Galvelpor SAS, 29800 Landerneau (FR)
(72) Inventeur: RAYNAUD, Eric, 42110 Feurs (FR)
(74) Mandataire: Cabinet Laurent & Charras

(57) **Abrégé**

La présente invention concerne une case destinée à héberger une truie et ses porcelets, comprenant une caisse (10) prévue pour la truie, un plancher (20) prévu pour les porcelets, et un système de levage (30) configuré pour déplacer la caisse (10) en hauteur (H1) par rapport au plancher (20), caractérisée en ce que le système de levage (30) comprend à la fois : une armature (40) fixée au plancher (20) ; un mécanisme de bielles (50) articulé entre la caisse (10) et l'armature (40), maintenant la caisse (10) parallèle au plancher (20) au cours de son déplacement en hauteur ; un unique dispositif de commande central (60) positionné sous la caisse (10) et prévu pour déplacer la caisse (10) en hauteur; et un dispositif de manoeuvre (80) actionnable par la truie et pilotant le dispositif de commande central (60) en fonction de la position de la truie sur la caisse (10). L'invention concerne également un procédé de mise en oeuvre d'une telle case.

## Description

La présente invention concerne une case destinée à héberger une truie et ses porcelets après la mise à bas, pendant la période d'allaitement. L'invention concerne également un procédé de mise en oeuvre d'une telle case. Le domaine de l'invention est celui des installations d'élevage porcin.

Généralement, une truie accouche de douze à quinze porcelets pesant environ 1 kg chacun. Pendant la période d'allaitement, la truie se couche régulièrement pour faire téter ses porcelets. De manière accidentelle, un porcelet peut se trouver coincé sous la truie en position couchée sans que celle-ci ne le remarque. En l'absence de mesures adéquates, il existe donc un risque d'étouffement des porcelets, assez important dans les premiers jours d'allaitement. Cependant, dans un élevage, il n'est pas possible de surveiller chaque truie en permanence pendant la période d'allaitement.

EP 0 360 308 décrit un exemple de case, comprenant une caisse pour la truie et un plancher pour les porcelets, Pour éviter le phénomène d'étouffement, la case est équipée d'un système de levage pour déplacer la caisse en hauteur par rapport au plancher. A chaque extrémité longitudinale de la caisse, le système comprend un électromoteur et une tige filetée. Pour commander les électromoteurs, le système comprend également une cellule photoélectrique détectant la position debout ou couchée de la truie. Ainsi, la hauteur de la caisse peut être ajustée en fonction de la position de la truie. Par conséquent, le risque d'écrasement des porcelets est réduit.

EP 1 606 994 décrit un autre exemple de case équipée d'un système de levage de la caisse, comprenant un coussin d'air gonflable et un mécanisme en ciseaux. Un interrupteur est positionné sur le plancher de la caisse. Lorsque la truie se couche sur l'interrupteur, l'air s'échappe du coussin pour abaisser la caisse. Lorsque la truie se relève et ne presse plus l'interrupteur, de l'air sous pression pénètre dans le coussin pour relever la caisse. Comme le mécanisme en ciseaux est situé au centre de la caisse, les efforts de levage ne sont pas bien répartis sur l'ensemble de la caisse, notamment à ses extrémités. En outre, le mécanisme comprend des galets roulant sur des rails, qui risquent de s'encrasser avec le lisier, gênant le déplacement des galets et donc de la caisse. Egalement, l'interrupteur situé sous la truie est susceptible de s'encrasser.

EP 2 050 333 décrit un autre exemple de case équipée d'un système de levage de la caisse, comprenant quatre vérins pneumatiques disposés sous les quatre coins de la caisse. A chaque extrémité longitudinale de la caisse, une paire de ces vérins est interposée entre un profilé transversal et le plancher de la caisse. A chacune de ses extrémités, chaque profilé transversal est fixé au plancher de la case par l'intermédiaire d'un profilé vertical. Le système de levage comprend également un bouton de commande disposé sur le plancher de la caisse. Lorsque la truie se couche sur le bouton, les vérins sont actionnés pour abaisser la caisse. Lorsque la truie se relève et ne presse plus le bouton, les vérins sont actionnés pour relever la caisse. Comme le système de levage comporte quatre vérins distants, son circuit de fluide est relativement complexe.

Le but de la présente invention est de proposer une case améliorée, munie d'un système de levage de la caisse.

A cet effet, l'invention a pour objet une case destinée à héberger une truie et ses porcelets, comprenant une caisse prévue pour la truie, un plancher prévu pour les porcelets, et un système de levage configuré pour déplacer la caisse en hauteur par rapport au plancher, caractérisée en ce que le système de levage comprend à la fois :
- une armature fixée au plancher ;
- un mécanisme de bielles articulé entre la caisse et l'armature, maintenant la caisse parallèle au plancher au cours de son déplacement en hauteur ;
- un unique dispositif de commande central positionné sous la caisse et prévu pour déplacer la caisse en hauteur ; et
- un dispositif de manoeuvre actionnable par la truie et pilotant le dispositif de commande central en fonction de la position de la truie sur la caisse.

Ainsi, l'invention permet d'assurer la fonction de levage de la caisse de manière simple, efficace et économique. Le mécanisme de bielles permet une bonne répartition des efforts de levage sur l'ensemble de la caisse. Le dispositif de commande, qui est de préférence un vérin, est positionné directement sous la truie, ce qui améliore la stabilité de la caisse et du système de levage. En outre, l'utilisation d'un unique dispositif de commande simplifie grandement le circuit d'alimentation en fluide associé.

Selon d'autres caractéristiques avantageuses de l'invention, prises isolément ou en combinaison :
- Le dispositif de commande central est un vérin à soufflets.
- Le dispositif de commande central est un vérin hydropneumatique.
- Le dispositif de manoeuvre comprend un organe articulé par rapport à la caisse.
- Le dispositif de manoeuvre est positionné en hauteur.
- Le mécanisme à bielles est symétrique par rapport à un plan médian longitudinal de la caisse et dissymétrique par rapport à un plan médian transversal de la caisse.
- La caisse comprend un élément de plancher grillagé et un cadre, incluant deux longerons et des plaques latérales qui délimitent un espace recevant le mécanisme de bielles et le dispositif de commande central, sous l'élément de plancher grillagé.
- Le système de levage comprend un support intermédiaire positionné entre le dispositif de commande central et la caisse.
- La caisse est positionnée perpendiculairement aux bords de la case.
- La caisse est positionnée en biais par rapport aux bords de la case.

Selon un premier agencement, le dispositif de commande central est disposé verticalement. Le dispositif de commande central est supporté par l'armature. Le dispositif de commande central a une extrémité fixe solidaire de l'armature et une extrémité mobile (verticalement) solidaire de la caisse. Lorsque la caisse est en position relevée, le dispositif de commande central est partiellement logé dans un espace intérieur délimité par la caisse.

Selon un deuxième agencement, le dispositif de commande central est disposé horizontalement. Le dispositif de commande central est supporté par le mécanisme de bielles. Le dispositif de commande central a une extrémité mobile (longitudinalement et verticalement) solidaire du mécanisme de bielles et une extrémité mobile (verticalement uniquement) solidaire de la caisse. Lorsque la caisse est en position relevée, le dispositif de commande central est entièrement logé dans un espace intérieur délimité par la caisse.

L'invention a également pour objet un procédé de mise en oeuvre d'une case telle que mentionnée ci-dessus. Le procédé est caractérisé en ce que :
- lorsque la truie se couche sur la caisse et actionne le dispositif de manoeuvre vers une configuration de descente, le dispositif de commande central se rétracte et amène la caisse en position abaissée ; et
- lorsque la truie se lève sur la caisse et actionne le dispositif de manoeuvre vers une configuration de montée, le dispositif de commande central se déploie et amène la caisse en position relevée.

Dans le cas du premier agencement, le dispositif de commande central se rétracte et se déploie verticalement.

Dans le cas du second agencement, le dispositif de commande central se rétracte et se déploie horizontalement.

L'invention sera mieux comprise à la lecture de la description qui va suivre, donnée uniquement à titre d'exemple non limitatif et faite en référence aux dessins annexés sur lesquels :
- la figure 1 est une vue en perspective d'une case conforme à l'invention, incluant notamment une caisse pour la truie, montrée en position abaissée ;
- la figure 2 est une vue en perspective analogue à la figure 1, la caisse étant montrée en position relevée ;
- la figure 3 est une vue en perspective partielle, analogue aux figures 1 et 2, montrant uniquement un sous-ensemble comprenant la caisse et son mécanisme de levage, en position abaissée ;
- la figure 4 est une vue de dessus selon la flèche IV à la figure 3 ;
- la figure 5 est une vue de dessous selon la flèche V à la figure 3 ;
- la figure 6 est une vue de côté selon la flèche VI à la figure 1, montrant uniquement le plancher de la case, la caisse et son mécanisme de levage, en position abaissée ;
- la figure 7 est une vue de côté selon la flèche VII à la figure 2, montrant uniquement le plancher de la case, la caisse et son mécanisme de levage, en position relevée ;
- la figure 8 est une coupe selon la ligne VIII-VIII à la figure 6 ;
- la figure 9 est une coupe selon la ligne IX-IX à la figure 7 ;
- la figure 10 est une vue en perspective partielle d'une case conforme à un second mode de réalisation de l'invention, la caisse étant montrée en position abaissée ;
- la figure 11 est une vue en perspective partielle analogue à la figure 10, la caisse étant montrée en position relevée ;
- la figure 12 est une vue en perspective partielle d'une case conforme à un troisième mode de réalisation de l'invention, la caisse étant montrée en position abaissée ;
- la figure 13 est une vue en perspective partielle analogue à la figure 12, la caisse étant montrée en position relevée ;
- la figure 14 est une vue de dessous selon la flèche XIV à la figure 12 ;
- la figure 15 est une vue de dessous selon la flèche XV à la figure 13 ;
- la figure 16 est une vue de côté selon la flèche XVI à la figure 12, montrant uniquement le plancher de la case, la caisse et son mécanisme de levage, en position abaissée ;
- la figure 17 est une vue de côté selon la flèche XVII à la figure 13, montrant uniquement le plancher de la case, la caisse et son mécanisme de levage, en position relevée ;
- la figure 18 est une coupe selon la ligne XVIII-XVIII à la figure 16 ;
- la figure 19 est une coupe selon la ligne XIX-XIX à la figure 17 ;
- la figure 20 est une vue de côté selon la flèche XX à la figure 16 ;
- la figure 21 est une vue de côté selon la flèche XXI à la figure 17 ;
- la figure 22 est une vue en perspective partielle d'une case conforme à un quatrième mode de réalisation de l'invention, la caisse étant montrée en position abaissée ;
- la figure 23 est une vue en perspective partielle analogue à la figure 22, la caisse étant montrée en position relevée.

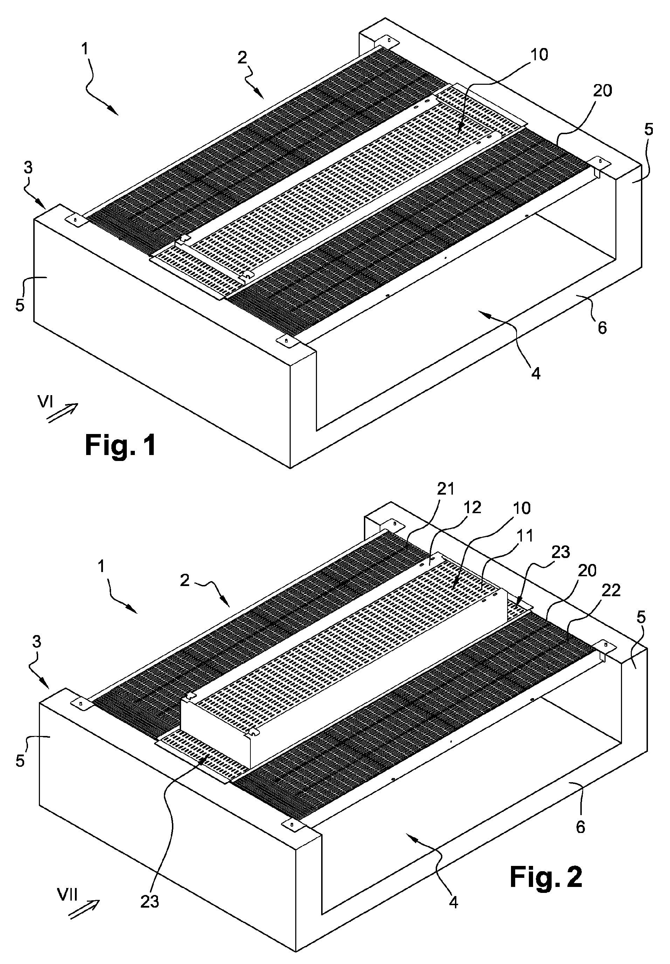

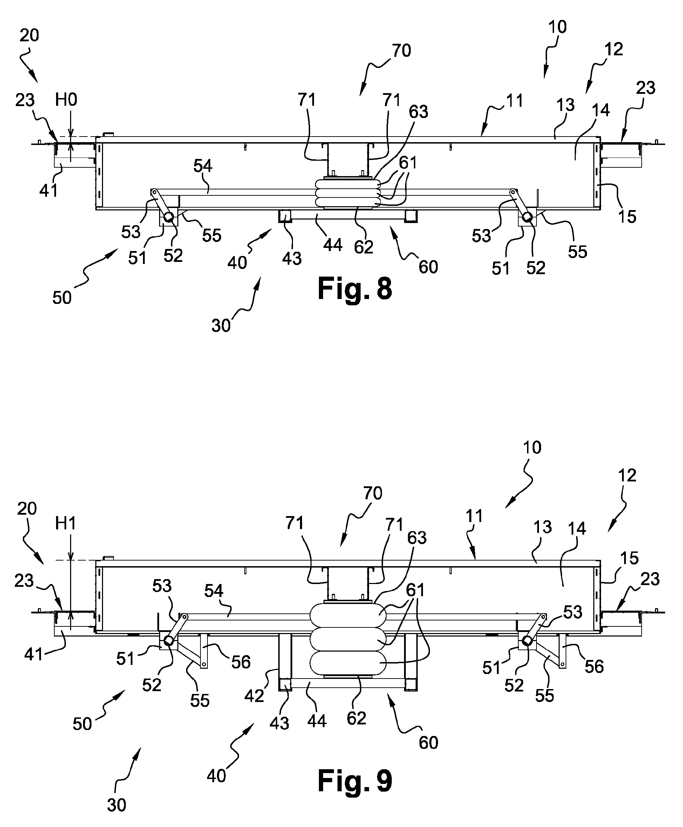

Sur les figures 1 à 9 est représentée une case 1 destinée à héberger une truie et ses porcelets après la mise à bas, pendant la période d'allaitement.

La case 1 comprend une partie supérieure 2 et un support inférieur 3, délimitant entre eux un espace intermédiaire 4. La partie supérieure 2 comprend la caisse 10 prévue pour accueillir la truie, et le plancher 20 prévu pour accueillir les porcelets. Par exemple, le support 3 peut être un élément de maçonnerie agencé dans le sol de la porcherie. Le support 3 comprend deux parois latérales 5 disposées verticalement en vis-à-vis, et une paroi inférieure 6 qui s'étend horizontalement entre les parois latérales 5. La partie supérieure 2 repose sur les parois 5, parallèlement à la paroi inférieure 6.

L'espace 4 délimité entre la partie supérieure 2 et les parois 5 et 6 accueille un système d'évacuation des déjections, non représenté dans un but de simplification. Egalement, l'espace 4 accueille un système 30 de levage de la caisse 10 par rapport au plancher 20, comme détaillé ci-après.

La case 1 comporte également des barrières latérales, non représentée dans un but de simplification, agencées tout autour du plancher 20 en formant un enclos pour la truie et ses porcelets. Cet enclos est pourvu d'au moins une porte permettant d'accéder à la case 1.

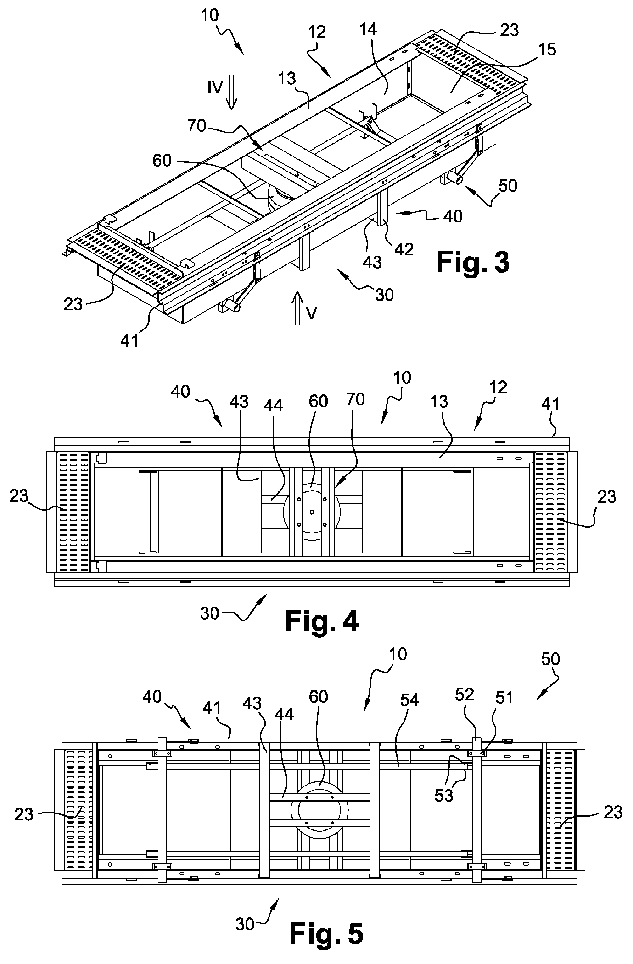

La caisse 10 comprend un plancher supérieur grillagé 11 prévu pour recevoir la truie en position debout ou couchée, ainsi qu'un cadre inférieur 12 supportant le plancher 11. Le plancher 11 n'est pas représenté aux figures 3 à 7 dans un but de simplification. La caisse 10 présente un profil parallélépipédique, allongé suivant une direction longitudinale perpendiculaire aux parois 5. Le plancher 11 présente donc une forme rectangulaire adaptée pour recevoir la truie. Le cadre 12 comprend deux longerons supérieurs longitudinaux 13, deux plaques latérales longitudinales 14 et deux plaques latérales transversales 15. Les plaques 14 et 15 délimitent un espace recevant le système de levage 30, sous le plancher 11.

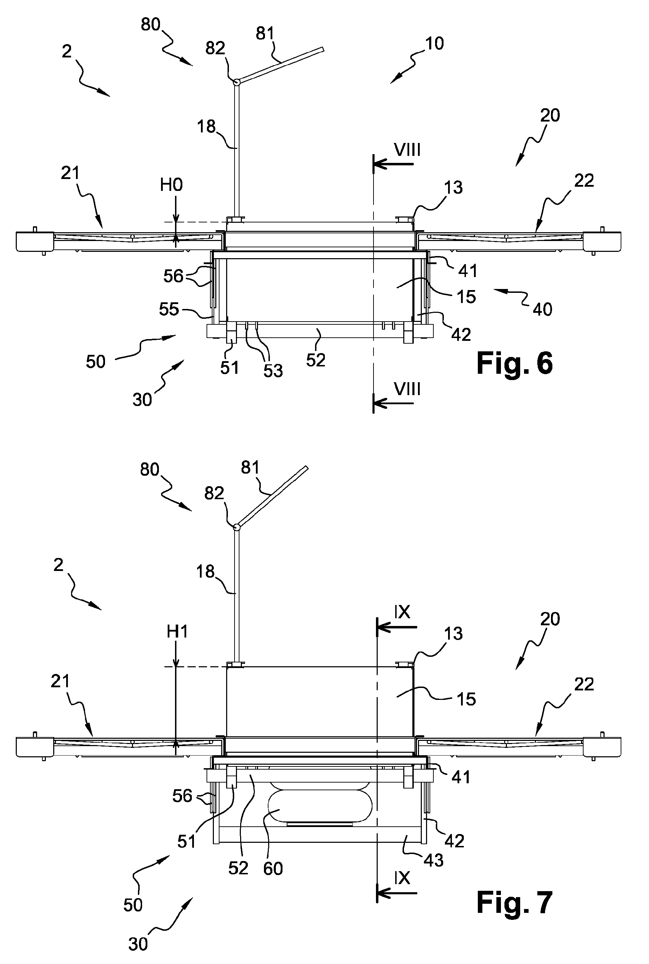

La caisse 10 comporte également des barrières latérales, agencées autour du plancher 11 en formant une cage pour la truie. Cette cage est pourvue d'au moins une porte permettant d'accéder à la caisse 10 et à la truie. Dans un but de simplification, seul un montant 18 des barrières est représenté, uniquement aux figures 6 et 7.

Le plancher 20 est fixe par rapport au support 3, contrairement à la caisse 10. Le plancher 20 comprend deux éléments de plancher 21 et 22 rectangulaires, disposés de part et d'autre de la caisse 10, suivant sa direction longitudinale. Le plancher 20 comprend également deux éléments de plancher 23 rectangulaires de plus petites dimensions et orientés transversalement. Les éléments de plancher 23 sont disposés aux extrémités longitudinales de la caisse 10, entre les éléments 21 et 22. Comme le plancher 11 de la caisse 10, les éléments de plancher 21, 22 et 23 sont grillagés.

Lorsque la truie se couche sur la caisse 10 pour permettre la tétée, en étant orientée vers l'élément 21 ou 22, les porcelets se regroupent sur cet élément 21 ou 22. Grâce aux éléments 23, les porcelets peuvent circuler facilement entre les éléments 21 et 22, en longeant la caisse 10.

Le système de levage 30 comprend une armature 40 fixée au plancher 20, un mécanisme à bielles parallèles 50, un vérin central 60, un support intermédiaire 70, et un dispositif de manoeuvre 80 actionnable par la truie.

L'armature 40 comprend des longerons longitudinaux 41, des profilés verticaux 42, des profilés horizontaux transversaux 43 et des profilés horizontaux longitudinaux 44 formant un ensemble rigide. Les longerons 41 sont fixés aux éléments de plancher 23 et s'étendent le long de la caisse 10, parallèlement aux longerons 13. Chaque longeron 41 s'étend entre la caisse 10 et les éléments de plancher 23 d'une part, et l'un des éléments de plancher 21 ou 22 d'autre part. Les profilés 42 sont fixés aux longerons 41, les profilés 43 sont fixés aux profilés 42 et les profilés 44 sont fixés aux profilés 43, formant ainsi une structure de support du vérin 60.

Le mécanisme à bielles parallèles 50 est articulé entre la caisse 10 et l'armature 40, aux extrémités longitudinales de la caisse 10 (et non dans la partie centrale de la caisse 10). Le mécanisme 50 est symétrique par rapport à un plan longitudinal médian de la caisse 10 et dissymétrique par rapport à un plan transversal médian de la caisse 10. Le mécanisme 50 comprend deux paires de paliers supports 51, deux tiges cylindriques transversales 52, quatre paires de bielles 53, deux tiges cylindriques longitudinales 54, deux paires de bielles 55 et quatre paires de bras supports 56. Les éléments 52, 53, 54, 55 et 56 constitutifs du mécanisme 50 sont de préférence réalisés en acier inoxydable, par exemple en AIS1304, plus résistant à la corrosion que l'acier galvanisé. Les paliers 51 peuvent être réalisés en polypropylène, et comporter un support en U, de préférence en acier inoxydable, fixé au cadre 12.

De chaque côté du vérin 60 suivant la direction longitudinale, deux paliers 51 sont fixés chacun à une plaque 14 du cadre 12. Chaque palier 51 supporte une extrémité de la tige 52. Une des paires de bielles 53, solidaires de la tige 52, est positionnée du côté interne de chaque palier 51. Une extrémité de la tige 54 est articulée aux extrémités des bielles 53 opposées à la tige 52. Une des bielles 55, solidaires de la tige 52, est positionnée du côté externe de chaque palier 51. Une extrémité de chaque bielle 55 opposée à la tige 52 est articulée aux extrémités inférieures d'une paire de bras 56. Les extrémités supérieures des bras 56 sont fixées aux longerons 41.

Au cours du déplacement de la caisse 10 en hauteur sous l'action du vérin 60, les tiges 52 sont mobiles en rotation autour d'axes parallèles définis par les paliers 51. Les bielles 53 restent parallèles entre elles tout en pivotant avec les tiges 52, les bielles 55 restent parallèle entre elles tout en pivotant avec les tiges 52, tandis que les tiges 54 restent parallèles entre elles tout en se translatant de part et d'autre du vérin 60. Le mécanisme 50 accompagne le déplacement de la caisse 10 entre les longerons 41 et les éléments de planchers 21 et 22. Le guidage de la caisse 10 par le mécanisme 50 permet de s'assurer que celle-ci reste droite, parallèle au plancher 20, au cours de sa montée et de sa descente.

Le vérin central 60 constitue un dispositif de commande permettant de déplacer la caisse 10. Le vérin 60 est un vérin à soufflets, ou vérin souple hydropneumatique, comportant plusieurs soufflets 61 superposés. Sur l'exemple non limitatif des figures, le vérin 60 comporte trois soufflets 61. En alternative, le vérin 60 peut comporter deux soufflets 61, ou un autre nombre de soufflets. Selon une autre alternative, le dispositif de commande central équipant le système 30 peut être d'un autre type adapté à l'application visée. La source et le circuit d'alimentation en fluide du vérin 60 ne sont pas représentés dans un but de simplification. Le vérin 60 comporte une extrémité inférieure 62 fixée à l'armature 40, plus précisément aux profilés 44, et une extrémité supérieure 63 fixée au support 70, comme détaillé ci-après.

Le vérin 60 est conçu, d'une part, pour exercer une force verticale ascendante sur la caisse 10 afin de lever celle-ci par rapport au plancher 20 malgré le poids de la truie et, d'autre part, pour exercer une fonction d'amortisseur afin d'abaisser la caisse 10 par rapport au plancher 20 sous le poids propre de la truie. Comme le vérin 60 est positionné directement sous la truie, la stabilité de la caisse 10 et du système de levage 30 sont améliorés. En outre, l'utilisation d'un unique vérin 60 simplifie grandement le circuit d'alimentation en fluide associé.

Le vérin 60 est situé dans la partie centrale longitudinale de la caisse 10, correspondant au tiers central de la caisse 10, par différenciation avec les tiers d'extrémités longitudinales de la caisse 10. Plus précisément, sur l'exemple des figures 1 à 9, le vérin 60 est situé au milieu de la caisse 10.

Le support intermédiaire 70 est formé par deux profilés transversaux 71 interposés entre la caisse 10 et le vérin central 60, plus précisément entre les longerons 13 du cadre 12 et l'extrémité supérieure 63 du vérin 60. Comme les longerons 13 sont plus résistants que le plancher 11, le support 70 permet d'optimiser la transmission des efforts entre le vérin 60 et la caisse 10. En alternative, le support 70 peut être formé par tout moyen adapté à l'application visée. Selon une autre alternative, le système 30 peut être dépourvu de support 70. Dans ce cas, l'extrémité 63 du vérin 60 est positionnée directement contre le plancher 11 de la caisse 10.

Le dispositif de manoeuvre 80 comprend un organe 81 positionné en hauteur, au-dessus de l'emplacement de la truie, et une articulation 82 connectant l'organe 81 au montant 18 de la caisse 10. L'organe 81 est mobile en rotation au niveau de l'articulation 82, qui définit un axe pivot parallèle à la direction longitudinale. Le dispositif 80 est représenté schématiquement aux figures 6 et 7, étant entendu que l'organe 81 et l'articulation 82 peuvent présenter toutes formes et dimensions adaptées à l'application visée.

Le dispositif 80 peut être actionné mécaniquement par la truie, et ainsi piloter le vérin 60, en fonction de la position de la truie sur la caisse 10. Lorsque la truie est debout, son dos appuie contre le dispositif 80 et le maintient relevé, comme dans la configuration de la figure 6. Lorsque la truie est couchée, son dos n'appuie pas contre le dispositif 80 et celui-ci peut librement s'abaisser, comme dans la configuration de la figure 7. Lorsque la truie change de position, le dispositif 80 change de configuration, passant d'une configuration de montée à une configuration de descente de la caisse 10, ou inversement.

De préférence, au cas où la truie change d'avis et retrouve rapidement sa position initiale, une temporisation de l'ordre de quelques secondes peut être prévue entre le moment où le dispositif 80 actionné par la truie change de configuration, et le moment où le dispositif 80 pilote le vérin 60 pour déplacer la caisse 10.

En pratique, le système de levage 30 permet de déplacer la caisse 10 en hauteur par rapport au plancher 20 en fonction de la position de la truie sur la caisse 10. Lorsque la truie se couche et actionne le dispositif 80 vers la configuration de descente, le vérin 60 se rétracte verticalement en exerçant une fonction d'amortisseur, et amène la caisse 10 en position abaissée. Lorsque la truie se lève et actionne le dispositif 80 vers la configuration de montée, le vérin central 60 se déploie verticalement en exerçant une force verticale ascendante sur la caisse 10, et amène cette caisse 10 en position relevée.

Par rapport au plancher 20, la caisse 10 est positionnée à une hauteur H0 dans la position abaissée des figures 1, 6 et 8, et à une hauteur H1 supérieure à la hauteur H0 dans la position relevée des figures 2, 7 et 9. La position abaissée permet à la truie couchée d'allaiter facilement les porcelets, tandis que la position relevée permet à la truie debout de ne pas écraser les porcelets.

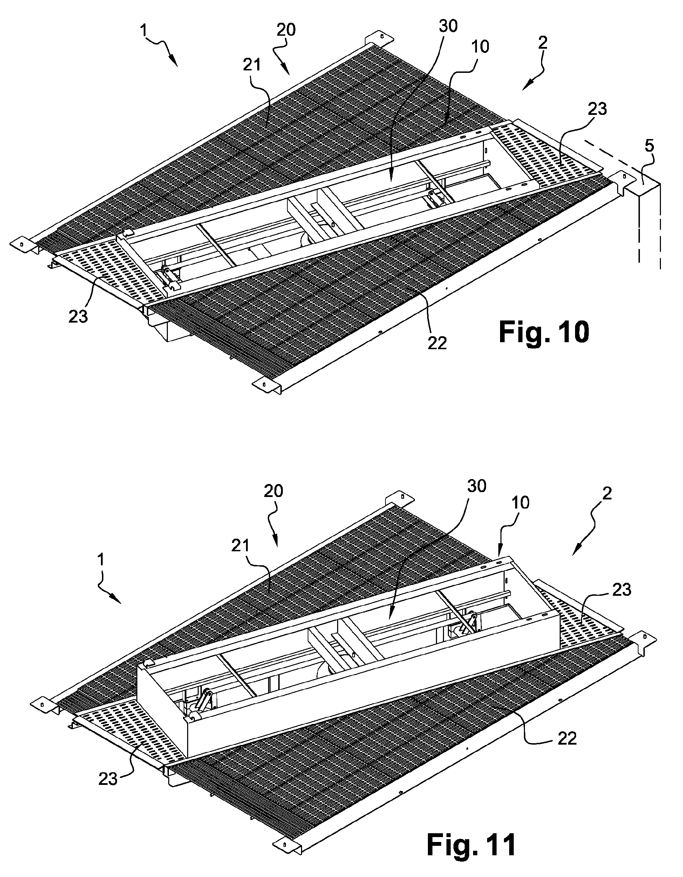

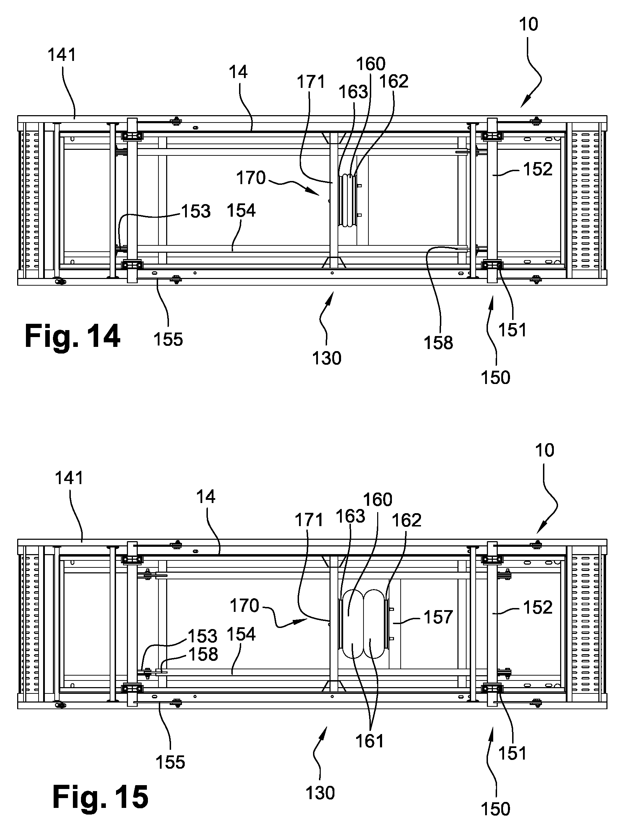

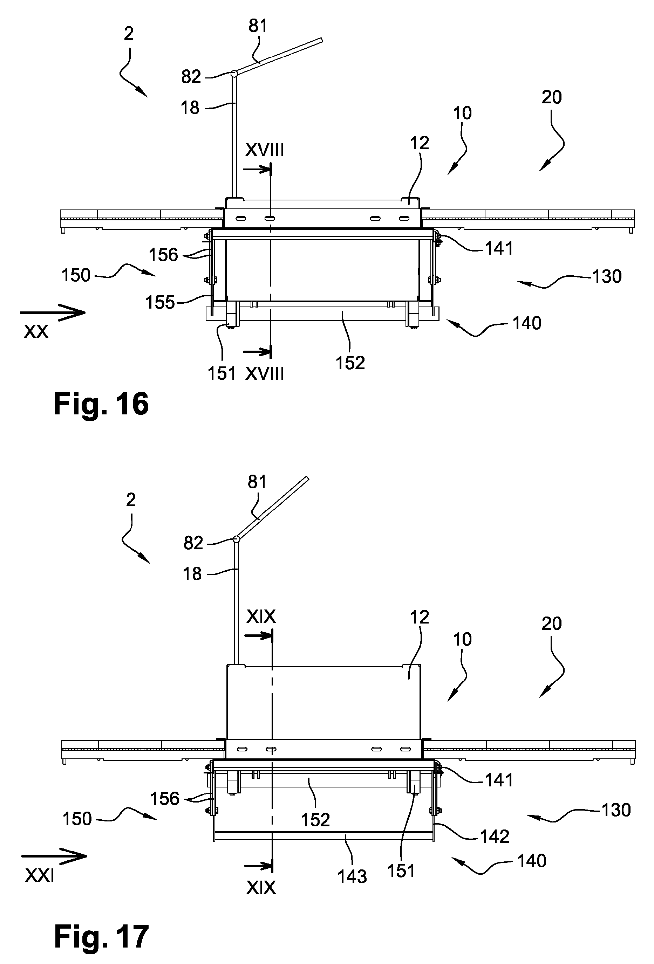

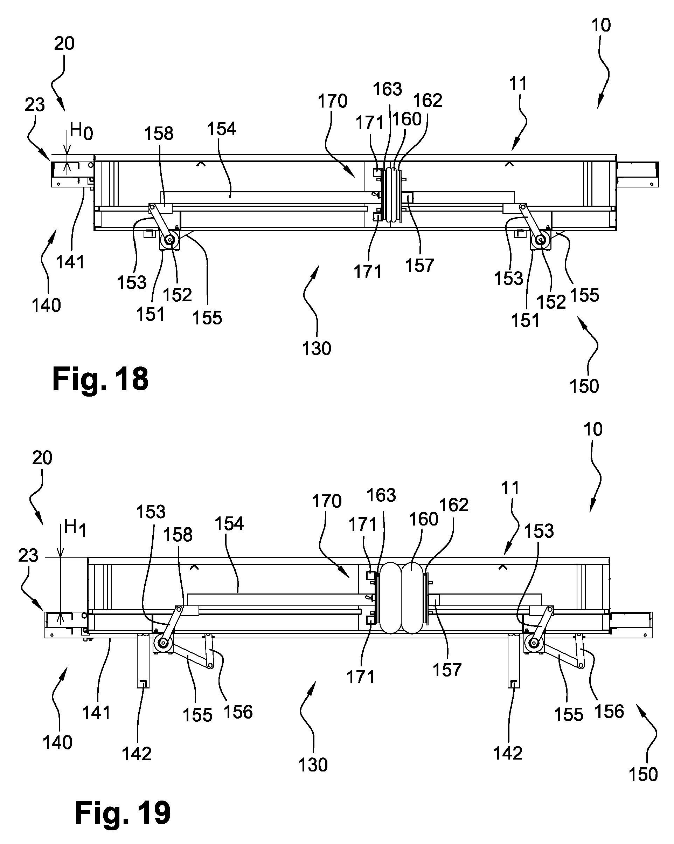

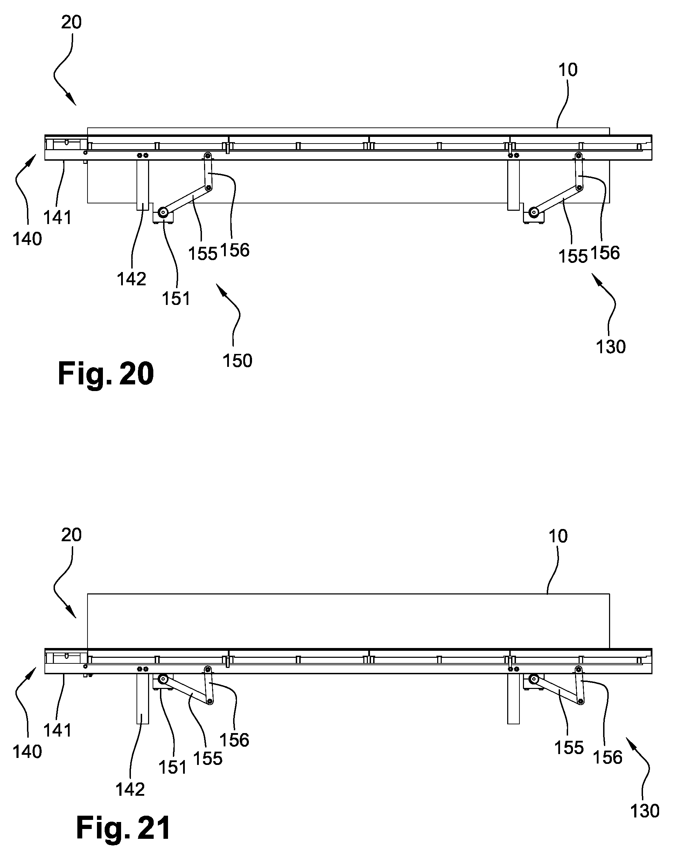

Les figures 10 à 23 montrent d'autres modes de réalisation d'une case 1 conforme à l'invention, partiellement représentée dans un but de simplification. Les éléments constitutifs de la case 1 qui sont comparables à ceux du premier mode de réalisation portent les mêmes références numériques.

Dans le second mode de réalisation des figures 10 et 11, le système de levage 30 et son fonctionnement sont similaires au premier mode de réalisation des figures 1 à 9.

La différence avec le premier mode de réalisation concerne l'orientation de la caisse 10 par rapport au reste de la case 1. Dans ce second mode de réalisation, la caisse 10 est positionnée en biais par rapport aux bords 5 de la case 1. Par conséquent, chacun des éléments de plancher 21, 22 et 23 présente une forme trapézoïdale au lieu d'une forme rectangulaire. Cette disposition offre plus d'espace aux porcelets dans la zone appelée coin à porcelets, par rapport au premier mode de réalisation.

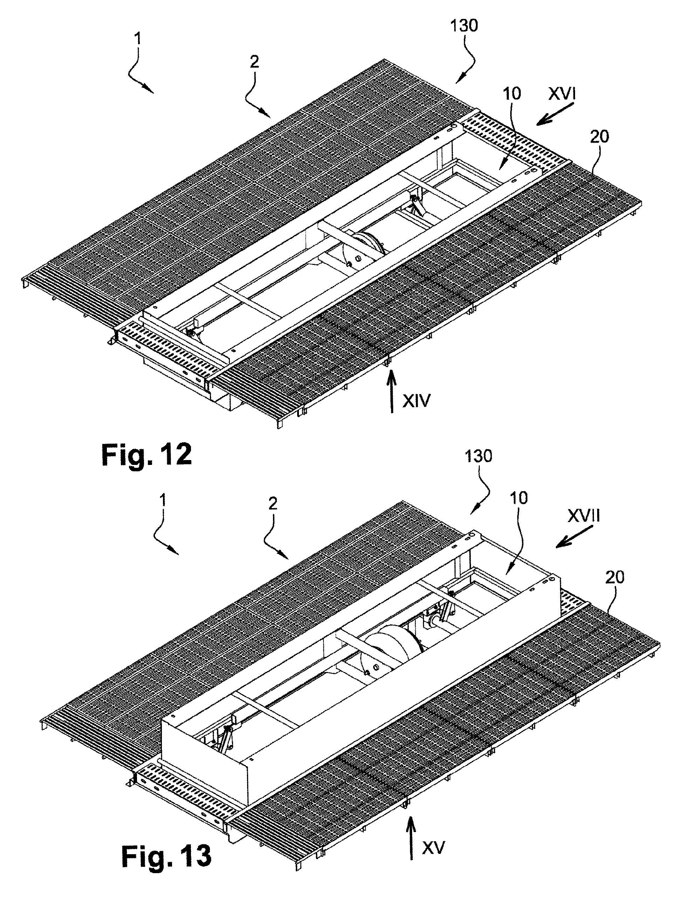

Dans le troisième mode de réalisation des figures 12 à 21, la case 1 comprend un système de levage 130 présentant une construction et un fonctionnement différents du premier mode de réalisation des figures 1 à 9. Les éléments constitutifs du système 130 qui présentent certaines différences avec le premier mode de réalisation portent des références numériques augmentées de 100. Seules les différences avec le premier mode de réalisation sont détaillées ci-après dans un but de simplification.

Le système de levage 130 comprend une armature 140 fixée au plancher 20, un mécanisme à bielles parallèles 150, un vérin central 160, un support intermédiaire 170, et un dispositif de manoeuvre 80 actionnable par la truie.

Le mécanisme 150 comprend deux paires de paliers supports 151, deux tiges cylindriques transversales 152, quatre paires de bielles 153, deux tiges longitudinales 154 de section rectangulaire, deux paires de bielles 155 et quatre paires de bras supports 156. Un profilé transversal 157 est fixé aux deux tiges 154, dont les extrémités sont solidarisées aux bielles 153 par des platines 158.

Le vérin 160 est disposé horizontalement, à la différence du vérin 60 disposé verticalement. Le vérin 160 comporte une extrémité 162 fixée au mécanisme 150, plus précisément au profilé 157 et une extrémité 163 fixée au support 170, plus précisément aux profilés transversaux 171 solidaires de la caisse 10. Lors de l'actionnement du vérin 160, l'extrémité 162 est mobile longitudinalement avec le mécanisme 150 et verticalement avec la caisse 10, tandis que l'extrémité 163 est mobile uniquement verticalement avec la caisse 10.

Le vérin 160 est situé dans la partie centrale longitudinale de la caisse 10, correspondant au tiers central de la caisse 10, par différenciation avec les tiers d'extrémités longitudinales de la caisse 10. Plus précisément, sur l'exemple des figures 12 à 21, le vérin 160 est légèrement plus rapproché d'une extrémité que de l'autre extrémité longitudinale de la caisse 10. Néanmoins, le vérin 160 est plus rapproché du milieu que des extrémités longitudinales de la caisse 10.

Le support 170 est formé par deux profilés transversaux 171 interposés entre la caisse 10 et le vérin central 160, plus précisément entre les parois 14 du cadre 12 et l'extrémité 163 du vérin 160. Comme le cadre 12 est plus résistant que le plancher 11, le support 170 permet d'optimiser la transmission des efforts entre le vérin 160 et la caisse 10. En alternative, le support 170 peut être formé par tout moyen adapté à l'application visée.

En pratique, le système de levage 130 permet de déplacer la caisse 10 en hauteur par rapport au plancher 20 en fonction de la position de la truie sur la caisse 10. Lorsque la truie se couche et actionne le dispositif 80 vers la configuration de descente, le vérin 160 se rétracte horizontalement en exerçant une fonction d'amortisseur, et amène la caisse 10 en position abaissée. Lorsque la truie se lève et actionne le dispositif 80 vers la configuration de montée, le vérin central 160 se déploie horizontalement en exerçant une force horizontale sur le mécanisme de bielles 50, qui exerce une force verticale ascendante sur la caisse 10, et amène cette caisse 10 en position relevée.

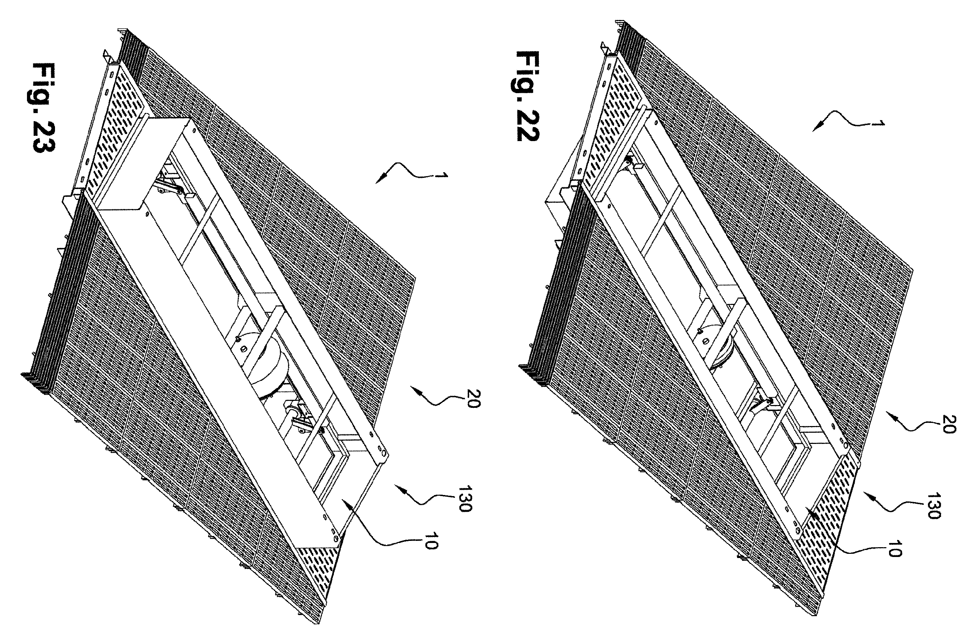

Dans le quatrième mode de réalisation des figures 22 et 23, l'orientation de la caisse 10 par rapport au reste de la case 1 est similaire au second mode de réalisation des figures 10 et 11, tandis que le système de levage 130 est similaire au troisième mode de réalisation des figures 12 à 21.

La case 1 peut être conformée différemment des figures 1 à 23 sans sortir du cadre de l'invention. En outre, les caractéristiques techniques des différents modes de réalisation et variantes mentionnés ci-dessus peuvent être, en totalité ou pour certaines d'entre elles, combinées entre elles. Ainsi, la case 1 peut être adaptée en termes de coût, de fonctionnalités et de performance.

## Revendications

1. Case (1) destinée à héberger une truie et ses porcelets, comprenant une caisse (10) prévue pour la truie, un plancher (20) prévu pour les porcelets, et un système de levage (30 ; 130) configuré pour déplacer la caisse (10) en hauteur (H0 ; H1) par rapport au plancher (20), **caractérisée en ce que** le système de levage (30 ; 130) comprend à la fois :
- une armature (40 ; 140) fixée au plancher (20) ;
- un mécanisme de bielles (50 ; 150) articulé entre la caisse (10) et l'armature (40 ; 140), maintenant la caisse (10) parallèle au plancher (20) au cours de son déplacement en hauteur ;
- un unique dispositif de commande central (60 ; 160) positionné sous la caisse (10) et prévu pour déplacer la caisse (10) en hauteur ; et
- un dispositif de manoeuvre (80) actionnable par la truie et pilotant le dispositif de commande central (60 ; 160) en fonction de la position de la truie sur la caisse (10).

2. Case (1) selon la revendication précédente, **caractérisée en ce que** le dispositif de commande central (60 ; 160) est un vérin hydropneumatique.

3. Case (1) selon l'une des revendications précédentes, **caractérisée en ce que** le dispositif de manoeuvre (80) comprend un organe articulé par rapport à la caisse (10).

4. Case (1) selon l'une des revendications précédentes, **caractérisée en ce que** le dispositif de manoeuvre (80) est positionné en hauteur.

5. Case (1) selon l'une des revendications précédentes, **caractérisée en ce que** le mécanisme à bielles (50 ; 150) est symétrique par rapport à un plan médian longitudinal de la caisse (10) et dissymétrique par rapport à un plan médian transversal de la caisse (10).

6. Case (1) selon l'une des revendications précédentes, **caractérisée en ce que** le système de levage (30 ; 130) comprend un support intermédiaire (70 ; 170) positionné entre le dispositif de commande central (60 ; 160) et la caisse (10).

7. Case (1) selon l'une des revendications 1 à 6, **caractérisée en ce que** le dispositif de commande central (60) est disposé verticalement.

8. Case (1) selon la revendication 7, **caractérisée en ce que** le dispositif de commande central (60) est supporté par l'armature (40).

9. Case (1) selon l'une des revendications 7 ou 8, **caractérisée en ce que** lorsque la caisse (10) est en position relevée, le dispositif de commande central (60) est partiellement logé dans un espace intérieur délimité par la caisse (10).

10. Case (1) selon l'une des revendications 1 à 6, **caractérisée en ce que** le dispositif de commande central (160) est disposé horizontalement.

11. Case (1) selon la revendication 10, **caractérisée en ce que** le dispositif de commande central (160) est supporté par le mécanisme de bielles (150).

12. Case (1) selon l'une des revendications 10 ou 11, **caractérisée en ce que** lorsque la caisse (10) est en position relevée, le dispositif de commande central (160) est entièrement logé dans un espace intérieur délimité par la caisse (10).

13. Case (1) selon l'une des revendications 1 à 12, **caractérisée en ce que** la caisse (10) est positionnée perpendiculairement aux bords (5) de la case (1).

14. Case (1) selon l'une des revendications 1 à 12, **caractérisée en ce que** la caisse (10) est positionnée en biais par rapport aux bords (5) de la case (1).

15. Procédé de mise en oeuvre d'une case (1) selon l'une des revendications précédentes, **caractérisé en ce que** :
- lorsque la truie se couche sur la caisse (10) et actionne le dispositif de manoeuvre (80) vers une configuration de descente, le dispositif de commande central (60 ; 160) se rétracte et amène la caisse (10) en position abaissée ; et
- lorsque la truie se lève sur la caisse (10) et actionne le dispositif de manoeuvre (80) vers une configuration de montée, le dispositif de commande central (60 ; 160) se déploie et amène la caisse (10) en position relevée.
